Europäisches Patentamt

(19) European Patent Office  (11) Publication number: **0 125 333**

Office européen des brevets  **B1**

(12) **EUROPEAN PATENT SPECIFICATION**

(45) Date of publication of patent specification: **30.12.86**  (51) Int. Cl.⁴: **B 62 D 1/18**

(21) Application number: **83104817.8**

(22) Date of filing: **16.05.83**

(54) Automotive steering column tilt adjusting device.

(43) Date of publication of application:
**21.11.84 Bulletin 84/47**

(45) Publication of the grant of the patent:
**30.12.86 Bulletin 86/52**

(84) Designated Contracting States:
**DE FR GB**

(56) References cited:
**EP-A-0 050 999**
**DE-A-3 206 328**
**FR-A-2 446 212**
**US-A-4 102 218**

(73) Proprietor: **NISSAN MOTOR CO., LTD.**
**No.2, Takara-cho, Kanagawa-ku**
**Yokohama-shi Kanagawa-ken 221 (JP)**
(73) Proprietor: **FUJI KIKO COMPANY, LIMITED**
**9-5 Nihonbashihon-cho 3-chome Chuo-ku**
**Tokyo (JP)**

(72) Inventor: **Kinoshite, Satoshi**
**3639, Hamana Arai-cho**
**Hamana-gun Shizuoka-ken (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

# Description

The present invention relates generally to an automotive steering column tilt adjusting device which allows the steering column to be tilted to match the position of the driver. More specifically, the invention relates to a tilt adjusting device according to the precharacterising portion of claim 1, allowing delicate adjustment with a smaller incremental angle.

Conventionally, as for example disclosed in US—A—4102218, one kind of tilt adjusting device secures a steering column assembly at a selected steering column angular position by way of engagement between two sets of matching teeth. One set of teeth is formed on an edge of a movable section of the steering column and the other set of teeth is formed on a stationary section of the steering column.

In such a conventional tilt adjusting device, the increment of the steering column angle is determined by the pitch of the teeth. Therefore, to obtain a smaller incremental angle, it is necessary to reduce the pitch of the teeth or to increase the distance between the pivot of the movable part and the teeth thereof in relation to the distance between the pivot and the steering wheel. In the former case, the smaller teeth may be insufficiently strong. Regarding the latter case, since the space within the vehicle for the steering column assembly is strictly limited, it is not practical to significantly enlarge the size.

Therefore, it is an object of the present invention to provide a tilt adjusting device for an automotive steering column assembly in accordance with the preamble of claim 1 corresponding to US—A—4102218 which allows satisfactorily precise steering column angle adjustment without reducing the pitch of the teeth and without changing substantially the size of the steering column assembly.

Another object of the present invention is to provide a tilt adjusting device as described above which can be developed so as to permit the steering column to be temporarily moved and then returned to the previously adjusted position without having to be re-adjusted.

According to the present invention, a movable tooth plate is attached to a movable steering column section via a linkage and is rotatable about a pivot axis displaced from the pivot axis of the movable steering column section. The pivot axes of the movable toothed plate and the movable steering column section are so arranged that the teeth of the toothed plate move through a larger angle than the movable steering column section as the movable steering column section is adjusted to a desired angle.

Thus, the invention provides a tilt adjusting device for an automotive steering column assembly comprising a steering column and tube assembly the assembly including an upper movable section and a lower stationary section connected for rotation together, a stationary bracket for fixedly securing the lower stationary section to a vehicle body, a movable bracket connected to the upper movable section for movement therewith and pivotable with respect to the stationary brackets, a latching mechanism including interengageable members, each having interengagement means, for latching said movable bracket at a selected angular position with respect to the stationary bracket, a first member being connected to the movable bracket for movement therewith, a manually operated lever for releasing interengagement of the first and second members for permitting pivotal movement of the movable bracket, and pivotting means for pivotably supporting the movable bracket and the first member for relative movement with respect to each other, the pivot means including a first pivot allowing pivotal movement of the movable bracket and a second pivot allowing pivotal movement of the first member, the second pivot being located closer to the interengagement means of the first member than the first pivot is to be interengagement means of the first member. More specifically the cooperating linkage means is adapted to transform a predetermined angular displacement of said movable bracket into an enlarged angular displacement of said first member so as to enable precise adjustment of a desired steering column angle to be effected.

Preferred embodiments of the cooperating linkage means are disclosed in the subclaims, in particular in claims 3 and 16.

The present invention will be understood more fully from the detailed description given herebelow and from the accompanying drawings of the preferred embodiments of the invention, which, however, should not be taken as limitative to the invention but for elucidation and explanation only.

In the drawings:

Fig. 1 is an elevation of an automotive steering column assembly including the first embodiment of a tilt adjusting device according to the present invention;

Fig. 2 is an enlarged elevation of the tilt adjusting device of Fig. 1;

Fig. 3 shows a section taken along line III—III of Fig. 2;

Fig. 4 is an explanatory diagram of the angular movements of about the axes of the movable bracket and the toothed plate of the tilt adjusting device of the first embodiment;

Fig. 5 is a fragmentary elevation of a modification of the first embodiment;

Fig. 6 is a plan view of another modification of the tilt adjusting device of the first embodiment;

Fig. 7 is an elevation of the tilt adjusting device of Fig. 6;

Fig. 8 shows a section taken along line VIII—VIII of Fig. 7;

Fig. 9 is an elevation of a further modification of the tilt adjusting device of the first embodiment;

Fig. 10 is an elevation of the steering column assembly including the second embodiment of the tilt adjusting device according to the present invention;

Fig. 11 is an enlarged plan view of the second embodiment of the tilt adjusting device of Fig. 10;

Fig. 12 is an enlarged elevation of the tilt adjusting device of Fig. 11;

Fig. 13 shows a section taken along line XIII—XIII of Fig. 12; and

Fig. 14 is an elevation of a modification of the second embodiment of the tilt adjusting device.

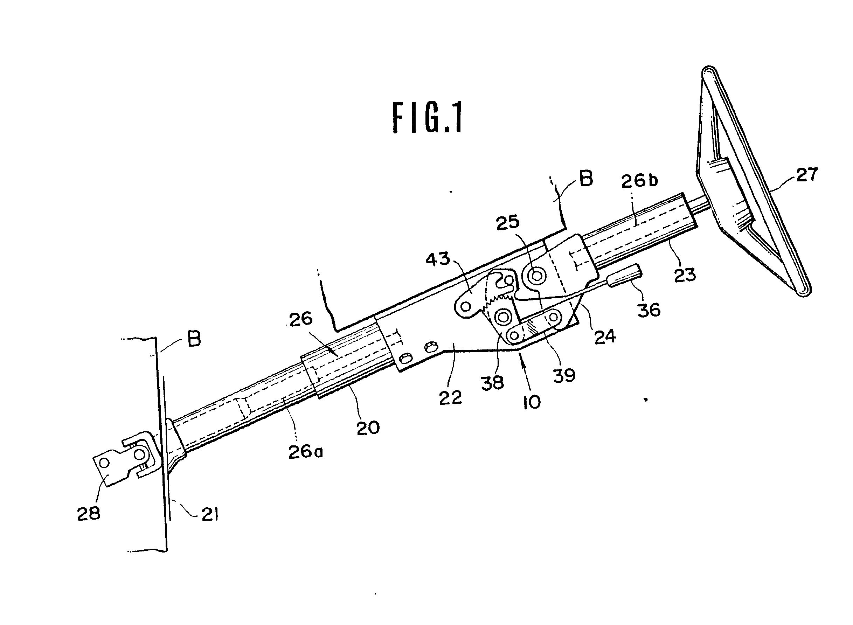

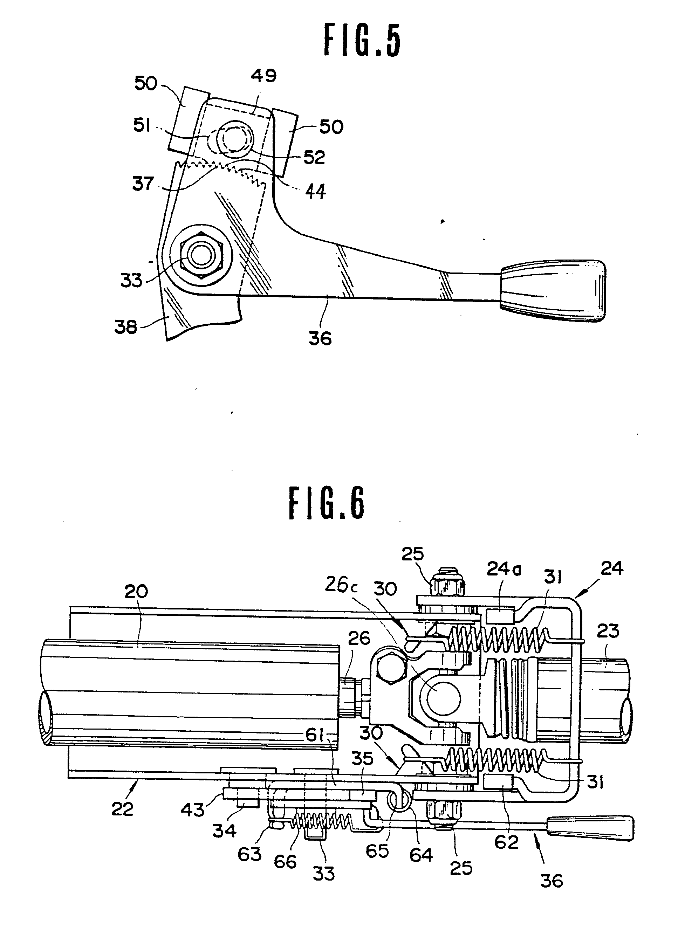

Referring now to the drawings, particularly to Fig. 1, a steering column assembly generally comprises an upper steering column tube 23 and a lower steering column tube 20. The lower steering column tube 20 has a dash bracket 21 at the lower end remote from the upper steering column tube. The dash bracket 21 is secured to a vehicle body B. A stationary bracket 22 is secured to both the other end of the lower steering column tube 20, and the vehicle body B, specifically a vehicle instrument panel. Thus, the lower steering column tube 20 is fixedly secured to the vehicle body B by the dash bracket 21 and the stationary bracket 22.

The upper steering column tube 23 is formed with an integral movable bracket 24. The movable bracket 24 is essentially channel-shaped in cross-section and pivots about a pivot bolt 25 in the stationary bracket 22. The movable bracket 24 is associated with a tilt adjusting mechanism 10 operated by way of a tilt adjusting lever 36.

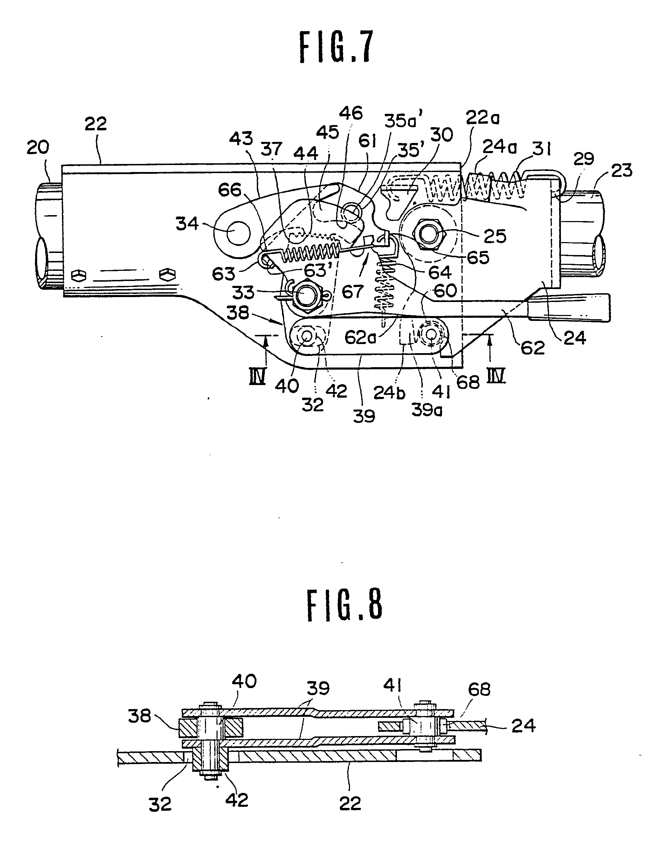

The upper steering column tube 23 rotatably receives an upper steering column shaft 26b to which the steering wheel 27 is secured. On the other hand, the lower steering column tube 20 rotatably receives a lower steering column shaft 26a connected to a steering mechanism (not shown) via a universal joint 28. The upper and lower steering column shafts 26b and 26a are connected to each other via a universal joint (26c in Fig. 6) for transmission of rotational steering force.

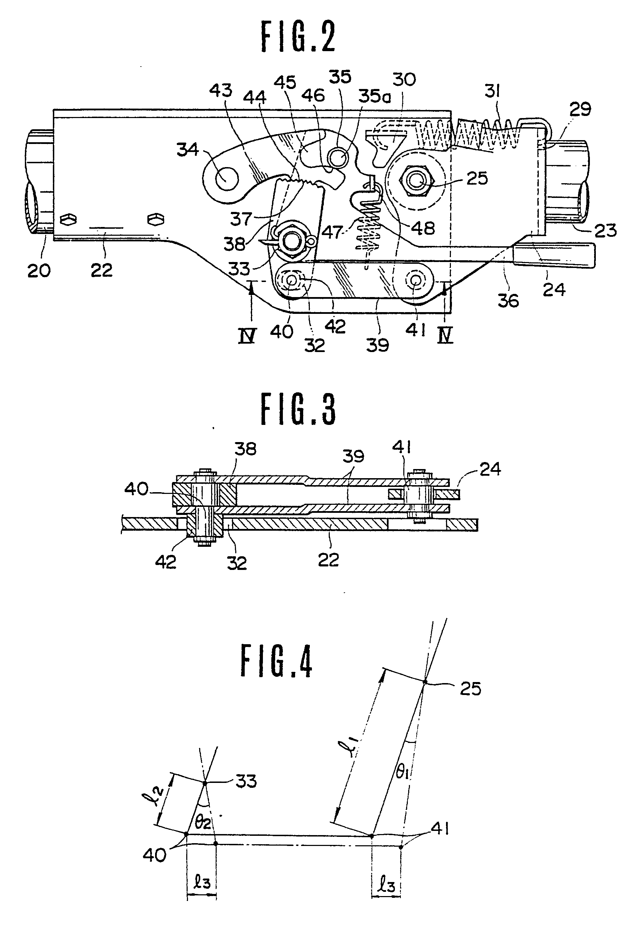

As shown in Figs. 2 and 3, the movable bracket 24 engages one end of a coil spring 31, the other end of which engages a hook 30 projecting from the stationary bracket 22. The coil spring 31 thus resiliently biases the movable bracket 24 counterclockwise in Fig. 2. In addition, an elongated opening 32 is formed in the stationary bracket 22 to receive a roller 42 which rotates about a pin 40 projecting from a pair of linkage levers 39. As shown most clearly in Fig. 3, the linkage levers 39 are connected to a pivotable plate 38 with teeth 37 along one edge, which toothed plate 38 is free to pivot about a pivot pin 33 projecting from the stationary bracket 22. The linkage levers 39 are, in turn, pivotably connected to the movable bracket 24 via a connector pin 41. As shown in Fig. 2, the linkage levers 39 engage one end of a coil spring 47, the other end of which engages a hook 48 extending from the tilt adjusting lever 36.

The teeth 37 of the toothed plate 38 oppose teeth 44 formed along part of the edge of a latch plate 43. The latch plate 43 is free to pivot about a pivot pin 34 projecting from the stationary bracket 22 and is also formed with a rounded recess 45 with a sloping cam surface 46.

The tilt adjusting lever 36 is provided with a roller 35 free to pivot about an axle 35a projecting from the tilt adjusting lever. The roller 35 opposes the recess 45 and is positioned so as to be able to remain in contact with the cam surface 46 throughout its range of movement. In the position illustrated in Fig. 2, the tilt adjusting lever 36 is normally biased by the coil spring 47 in the clockwise direction of Fig. 2 to urge the roller 35 onto the cam surface 46. On the other hand, the movable bracket 24 is biased by the coil spring 31 in the counterclockwise direction of Fig. 2. In this position, the latch plate 43 is biased in the clockwise direction about the pivot pin 34 so as to establish engagement between its teeth 44 and the teeth 37 of the toothed plate 38. The engagement between the teeth 37 and the latch teeth 44 holds the toothed plate 38 in the position illustrated in Fig. 2 and thus holds the linkage lever 39 in the shown position. As a result, the movable bracket 24 of the upper steering column tube 23 is similarly held in the position illustrated.

To adjust the tilt of the steering column assembly and thereby adjust the height of the steering wheel 27, the tilt adjusting lever 36 is moved in the counterclockwise direction of Fig. 2. The roller is thus moved along the cam surface 46 of the latch plate 43 to the recess 45. Due to the actuating force applied to the tilt adjusting lever 36, the latch plate 43 is pivotted counterclockwise about the pivot pin 34 to release the latch teeth 44 from engagement with the teeth 37 of the toothed plate 38.

In accordance with the counterclockwise movement of the tilt adjusting lever 36, the linkage lever 39 is pulled upwardly by the spring force of the coil spring 47 to cause it to pivot about the pin 40 in the counterclockwise direction. This allows the movable bracket 24 to pivot counterclockwise due to the spring force of the coil spring 31. That is, in response to the operation of the tilt adjusting lever 36, the movable bracket 24 and the upper steering column tube 23 are moved to the uppermost position due to the spring force of the coil spring 31.

From the uppermost position, the movable bracket 24 with the steering column tube 23 can be manually pivotted in the clockwise direction to lower the steering wheel to the most suitable steering wheel position. After the above steering wheel position adjustment, in other words after adjustment of the tilt of the upper steering column tube 26b, the tilt adjusting lever 36 is released from the counterclockwise force so that the tilt adjusting lever 36 returns to its initial position due to the spring force of the coil spring 47. The roller 35 thus moves out of the recess 45 along the cam surface 46 to bias the latch plate 43 towards the toothed plate 38 so that the latching teeth 44 engage the teeth 37. As a result, the movable bracket 24 and the upper steering column 23 are secured in the adjusted angular position.

Fig. 4 is an explanatory diagram of the geometry of the movement of the movable bracket 24, the linkage lever 39 and the toothed plate 38. As apparent from Fig. 4, when the movable bracket 24 pivots about the pivot bolt 25 through an angle $\theta_1$, the displacement at the connector pin 41 is a fixed distance $l_3$. Therefore, the pivot pin 40 is also displaced by the distance $l_3$. If the distance between the connector pin 41 and the pivot bolt 25 is $l_1$ and the distance between the pivot 33 and the pivot pin 40 are given as $l_1$ and $l_2$ respectively, then the angle $\theta_2$ through which the toothed plate 38 pivots is $l_1/l_2$ times larger than the angle $\theta_1$.

Therefore, as will be appreciated, according to the shown embodiment, the pivotal angle of the toothed plate 38 is greater than the corresponding pivot angle of the movable bracket 24. As a result, even if the teeth 37 and 44 are of a conventional pitch, the minimum angular increment of the steering column assembly tilt can be sufficiently small to allow delicate adjustment.

Fig. 5 shows a modification of the foregoing first embodiment of steering column tilt adjusting mechanism according to the present invention. In this modification, the latch plate 49 with teeth 44 is bracketed by a pair of guide members 50 and is formed with an elongated opening 51. As in the foregoing first embodiment, the tilt adjusting lever 36 is free to pivot about the pivot pin 33 projecting from the stationary bracket, as is the toothed plate 38 with the teeth 37.

The guide members 50 protrude from the stationary bracket 22 and allow reciprocating, essentially up-and-down movement of the latch plate 49. A projecting pin 52 formed on the tilt adjusting lever 36 engages the elongated opening 51. The axis of the elongated opening 51 is inclined with respect to the axis of motion of the latch member 49 in order to cause reciprocal movement of the latch plate 49 in response to movement of the tilt adjusting lever 36.

Even though the movement of the latch plate 49 is different from that of the latch plate 43 in the foregoing first embodiment, the tilt adjusting function to be carried out by this modification is essentially the same as that of the foregoing first embodiment.

Figs. 6 to 8 show another modification of the foregoing first embodiment of the steering column tilt adjusting mechanism according to the present invention. In this modification, a locking plate 61 is pivotably supported by the pivot pin 33. A roller 35' is rotatably secured to the locking plate 61 for rotation about the roller axle 35a'. As with the roller 35 of the foregoing first embodiment, the roller 35' normally contacts the cam surface 46 of the latching plate 43 and can engage the recess 45 when the tilt adjusting lever 36 is actuated. The locking plate 61 also has a bent strip 63. The bent strip 63 opposes a point 63' along the edge of the tilt adjusting lever 36. A coil spring 66 is stretched between the bent strip portion 63 and a hook 67 projecting from the tilt adjusting lever 36 in order to bias the bent strip portion 63 towards the point 63' of the tilt adjusting lever 36 and establish contact therebetween.

The locking plate 61 has a hook 65 to which one end of a coil spring 64 is attached. The other end of the coil spring 64 is attached to the linkage lever 39. The linkage lever 39 has a projection 41 which rotatably supports a roller 68. The roller 68 is adapted to engage a recess 60 formed in the lower edge of the movable bracket 24.

On the other hand, the upper edge of the linkage lever 39 opposes the lower edge 62a of the tilt adjusting lever 36 so that the linkage lever 39 will be depressed downward when the tilt adjusting lever 36 is moved clockwise.

The roller 35' supported by the locking plate 61 normally contacts the cam surface 46 of the latch plate 43 to cause the latch teeth 44 to engage the teeth 37 of the toothed plate 38. As a result, movement of the linkage lever 39 is restricted. The linkage lever 39 is also biased upwardly by the coil spring 64 to ensure engagement between the roller 68 and the recess 60. Since movement of the linkage lever 39 is restricted due to the interengagement of the latch plate 43 and the toothed plate 38, movement of the movable bracket 24 and the upper steering column 23 is also restricted. Therefore, in the position illustrated in Fig. 7, the movable bracket 24 is held securely in place.

As in the foregoing first embodiment, the tilt adjustment can be performed by move the tilt adjusting lever 36 counterclockwise. In response to counterclockwise movement of the tilt adjusting lever 36, the bent strip 63 of the locking plate 61 is driven to pivot the locking plate 61 in the counterclockwise direction. According to this movement of the locking plate 61, the roller 35' moves along the cam surface 46 to the recess 45. The roller 35', once within the recess 45, urges the latch plate 43 in the counterclockwise direction to release the engagement between the latch teeth 44 to the latch teeth 37 of the toothed plate 38.

At the same time, due to the counterclockwise movement of the locking plate 61, the linkage lever 39 is pulled upwards to pivot counterclockwise about the pin 40 by the spring force of the coil spring 64. Due to the upward movement of the linkage lever 39, the movable bracket 24 and the upper steering column 23 are moved counterclockwise to be positioned at the uppermost position. Thereafter, a suitable angular position can be selected by gradually lowering the upper steering column 23 and the movable bracket 24 from the uppermost position.

When a suitable steering column tilt is determined, the tilt adjusting lever 36 is returned to the initial position by clockwise rotation thereof. In response, the locking plate 61 is moved clockwise so that the roller 35' returns to the cam surface 46 of the latch plate 43. The latch plate 43 is thus moved so that the latch teeth 44 engage the teeth 37 of the toothed plate 38. Due to the interengagement of the latching plate 43 and the toothed plate 38, the linkage lever 39 and movable bracket

24 are held securely in the selected steering column angular position.

During this tilt adjusting operation, the universal joint 26c interposed between the upper and lower steering column shafts 26b and 26a permits variation of the angle of the upper steering column shaft with respect to the lower steering column shaft 26a.

In addition to the tilt-adjusting capability described above, this embodiment of the present invention also allows the steering column to be moved to its uppermost position and then returned to the previously selected position without having to be readjusted, as described below.

When the steering wheel must be moved, for example when the driver of the vehicle gets out of the vehicle or for some other reason, the tilt adjusting lever 36 is moved clockwise to release the steering column. Due to the clockwise movement of the tilt adjusting lever 36, the linkage lever 39 is depressed in the clockwise direction against the spring force of the coil spring 64 to release the roller 68 from the recess 60 of the movable bracket 24. As a result, the movable bracket 24 becomes free from the restriction due to the interengagement of the latch plate 43 and the toothed plate 38. The movable bracket 24 is then moved counterclockwise by the spring force of the coil spring 31. The counterclockwise movement of the movable bracket 24 is stopped when a stopper strip 24a formed on the upper edge of the movable member comes into contact with to a stopper edge 22a of the stationary bracket 22.

When the tilt adjusting lever 36 is moved clockwise, the point 63' is released from the bent strip 63 so that the engagement between the latching plate 43 and the toothed plate 38 remains unaffected.

To return the movable bracket 24 to the previous position, the movable bracket 24 is forced downwards against the force of the spring 31. During this clockwise movement of the movable bracket 24, a curved surface 24b of the movable bracket 24 contacts the roller 68 to depress the linkage lever 39 downwardly. Therefore, the linkage lever 39 rotates about the pin 40 against the spring force of the coil spring 64. Due to the resilient force of the coil spring 64, the roller 68 moves along the curved surface 24a and enters the recess 60, thus locking the steering column back into the previously selected position.

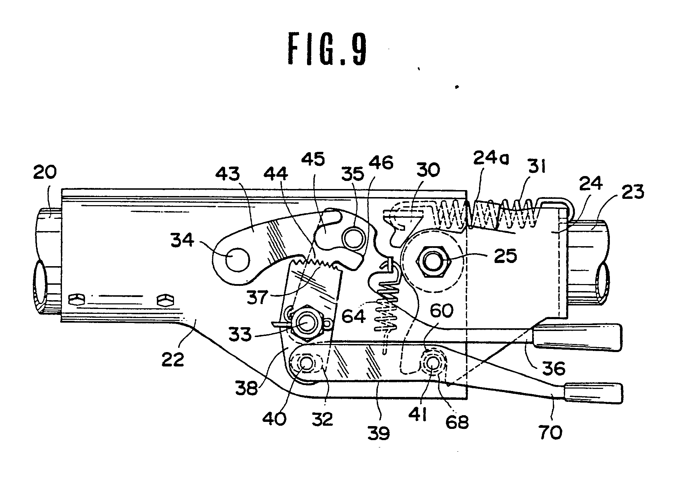

Fig. 9 shows a further modification of the foregoing embodiment of Figs. 6 to 8 which employs a first tilt adjusting lever 36 and a second separate lever 70 for temporarily moving the upper steering column upwards. In this modification, the second lever 70 allowing temporary upward movement of the upper steering column 23 forms an extension of the linkage lever 39. The first tilt adjusting lever 36 has essentially the same shape as that of the first embodiment of Fig. 1 and is actuable independently of the second lever 70. The linkage lever 39 rotatably supports the roller 68 near the end proximal to the lever 70. The roller 68 can rotate about the pin 41 and engage a recess 60 formed in the lower edge of the movable bracket 24.

As will be appreciated, the tilt adjusting operation is substantially identical to that illustrated with respect to the foregoing first embodiment. On the other hand, to temporarily move the upper steering column 23 and the movable bracket, the lever 70 is moved in the clockwise direction to release the roller 68 from engagement with the recess 60. As a result, the movable bracket 24 and the upper steering column 23 pivot in the counterclockwise direction due to the spring force of the coil spring 31. At this time, the pin 40 allows rotation of the linkage lever 39 independently of the toothed plate 38. Therefore, the toothed plate 38 remains in engagement with the latch plate 43.

As in the foregoing embodiment of Figs. 6 to 8, returning the steering column to its previous position from the uppermost position is performed by depressing the movable bracket 24 and the upper steering column downwardly. During downward movement of the movable bracket, the curved surface 24b contacts the roller 68 and depresses the linkage lever 39 to rotate clockwise about the pin 40. According to the downward movement of the movable bracket 24, the roller 68 moves along the surface 24b to engage with the recess 60 at the position previously selected.

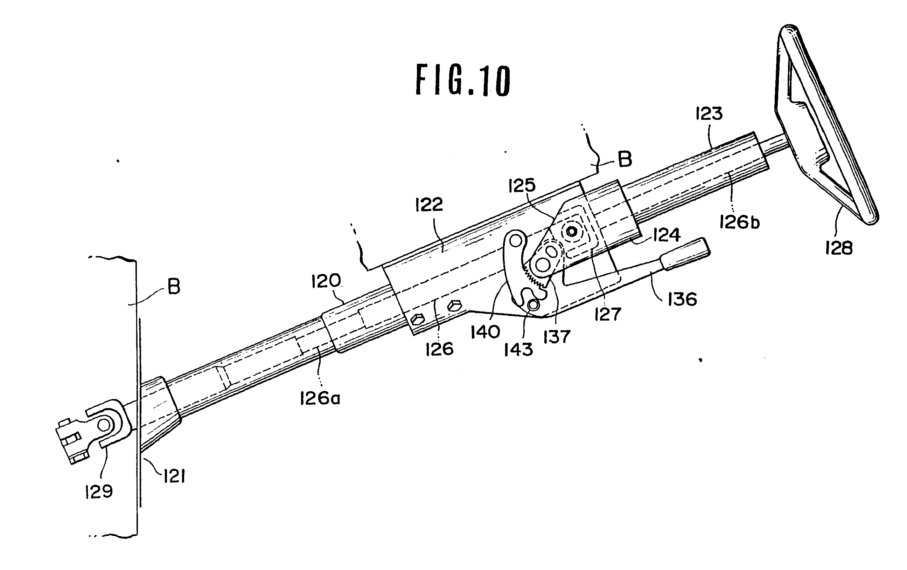

Figs. 10 to 12 show the second embodiment of the tilt adjusting mechanism for the steering column assembly according to the present invention. As in the foregoing first embodiment, the lower steering column tube 120 has a dash bracket 121 through which the lower end of the lower steering column tube 120 is secured to the vehicle body B. The upper end of the lower steering column tube 120 is, in turn, secured by the stationary bracket 122. Thus, the lower steering column tube 120 is fixedly secured on the vehicle body by the stationary bracket 122 and the dash bracket 121. The movable bracket 124 at the lower end of the upper steering column tube 123 is pivotably connected to the stationary bracket 122 via the pivot bolt 125.

The upper and lower steering column shafts 126a and 126b are housed in the upper and lower steering column tubes 120 and 123 for rotation therein. The universal joint 126c is interposed between the upper and lower steering column shafts 126b and 126a for transmission of the rotational steering force and to allow adjustment of the tilt of the upper steering column shaft 126b with respect to the lower steering column shaft 126a. The upper steering column shaft 126b supports a steering wheel 128 for steering operation. On the other hand, the lower end of the lower steering column shaft 126a is connected to the universal joint 129 to transmit the steering force to a steering mechanism (not shown).

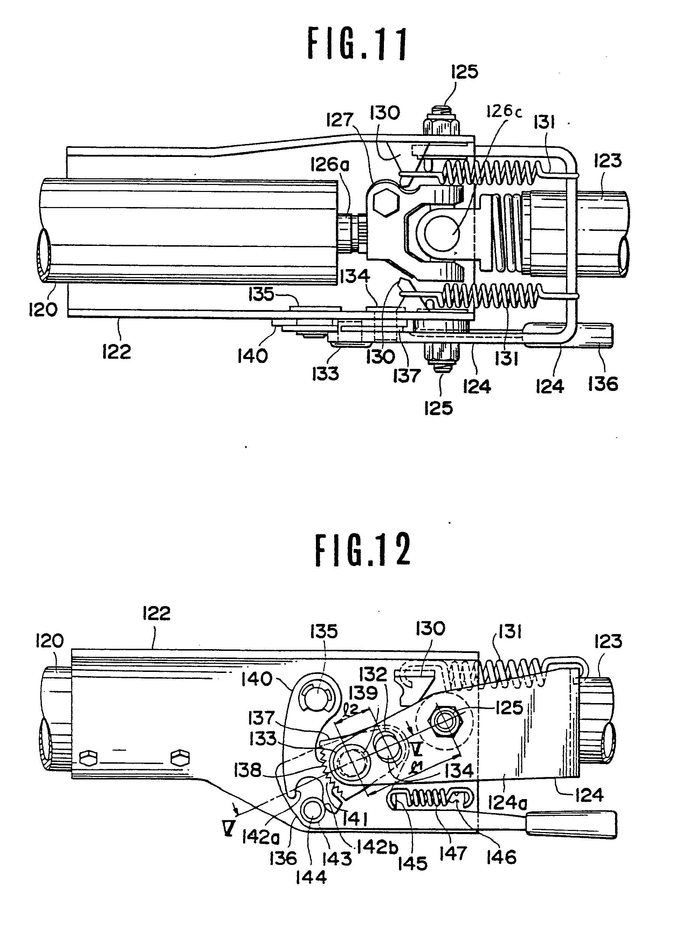

The movable bracket 124 is biased in the counterclockwise direction in Fig. 12 to be normally urged upwardly by a coil spring 131, one end of which engages the movable bracket and the other end of which engages a hook 130 projecting from the stationary bracket 122.

The tilt adjusting lever 136 is pivotably mounted on the stationary bracket 122 via a pivot pint 134. A plate 137 with teeth 138 is also pivotably supported by the pivot pin 134. The toothed plate 137 has a pin 133 projecting therefrom. The pin 134 movably engages an elongated opening 132 formed in the movable bracket 124. Similarly, the pivot pin 133 is free to move along an elongated opening 139. The longitudinal axis of elongated opening 139 is essentially perpendicular to the longitudinal axis of the elongated opening 132. The teeth 138 of the toothed plate 137 oppose the teeth 141 of a latch plate 140 which is free to pivot about a pivot 135. The latch plate 140 is formed with a recess 142a and a cam surface 142b extending along one edge of the recess. A roller 143 rotatable about an axle 144 projecting from a tilt adjusting lever 136 normally remains in contact with the cam surface 142b.

The tilt adjusting lever 136 is biased in the counterclockwise direction by a coil spring 147, one end of which engages a hook portion 145 extending from the tilt adjusting lever and the other end engages a hook 146 projecting from the stationary bracket 122.

In the normal position, the tilt adjusting lever 136 is biased in the counterclockwise direction to drive the cam surface 142b of the latch plate 140 towards the toothed plate 137 for interengagement of the teeth 138 and 141. As a result, the movement of the movable bracket 124 about the pivot bolt 125 is restricted despite the resilient force provided by the coil spring 131.

To adjust the tilt of the steering column assembly, the tilt adjusting lever 136 is moved in the clockwise direction in Fig. 12 to release the roller 143 from the cam surface 142b. Due to the rotational movement of the tilt adjusting lever 136, the roller 143 enters the recess 142a and urges the latch plate 140 to release the teeth 141 from engagement with the teeth 138 of the toothed plate 137. The toothed plate 137, thus, can rotate about the pin 134, thereby causing the pin 133 to move along the elongated opening 139 of the movable bracket 124.

At this time, the movable bracket 124 moves in the counterclockwise direction along with the upper steering column tube 123 due to the spring force of the coil spring 131. The toothed plate 137 can remain in place while the movable bracket 124 moves upwards since the pin 133 is free to move relative to the elongated opening 139.

After the movable bracket 124 and the upper steering column tube 123 reach their uppermost position, the movable bracket 124 can be manually forced downward while holding the tilt adjusting lever in the actuate position to select a suitable tilt position. When the steering column assembly is suitably positioned, the tilt adjusting lever 136 can be released to return to its initial position due to the force of the coil spring 147. During this return movement of the tilt adjusting lever 136, the roller 143 again comes into contact with the cam surface 142b of the latch plate 140 to establish engagement between the sets of teeth 138 and 141.

During this steering column assembly tilt adjusting operation, the pin-and-opening engagement between the pin 133 and opening 139 and the pin 134 and the opening 132 serves to magnify the angular displacement of the toothed plate 137 in relation to the angular displacement of the movable bracket according to the ratio of the distances $l_1$ and $l_2$ in Fig. 12. That is, since the toothed plate 137 is pivoted about the pivot pin 134 and the rotational movement of the movable bracket 124 is transmitted by way of the pin 133, the angular displacement of the teeth 138 is $l_1/l_2$ times larger than that of the pin 133. Therefore, even though the teeth has a conventional pitch, the minimum angular increment is sufficiently fine to allow precise adjustment.

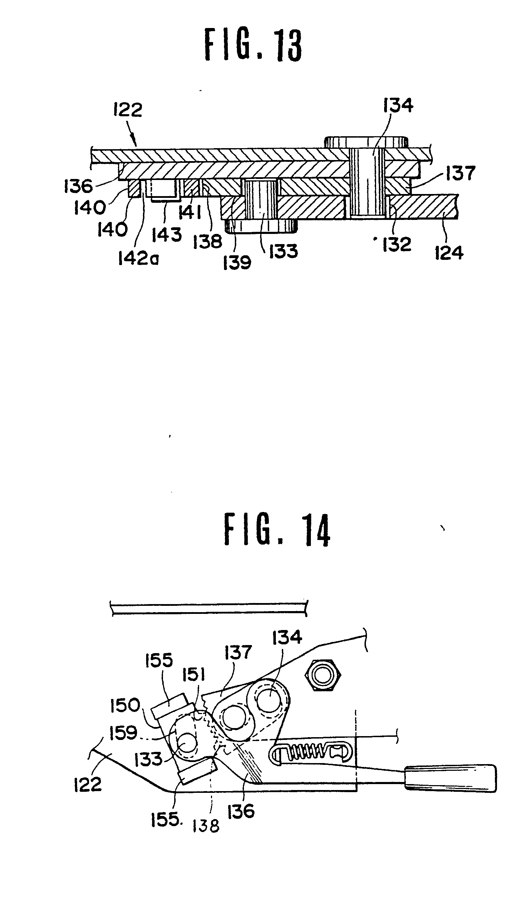

Fig. 14 shows a modification of the foregoing second embodiment of the tilt adjusting device according to the present invention. In this modification, a latchet plate 150 is bracketed by a pair of guides 155 for reciprocal movement toward and away from the teeth 138 of the toothed plate 137. The latch plate 150 is formed with an elongated opening 159 with a axis oblique to the axis of the latch plate. A pin 133 projecting from the tilt adjusting lever engages the elongated opening.

In this structure, releasing the engagement of the teeth 138 and 151 is performed by moving the pin along the elongated opening 159 of the latch plate 150. In this modification, the tilt adjustment can be performed in essentially the same manner as set forth in the second embodiment.

**Claims**

1. A tilt adjusting device (10) for an automotive steering column comprising:
said steering column including an upper movable section (26b, 126b; 23, 123) and a lower stationary section (26a, 126a; 20, 120);
a stationary bracket (22; 122) for fixedly securing said lower stationary section (26a, 126, 23, 123) onto a vehicle body (B);
a movable bracket (24; 124) connected to said upper movable section (23; 123; 26b; 126b) for movement therewith and being pivotable with respect to said stationary bracket (22, 122);
a latching mechanism (38, 37; 137, 138; 43, 44; 49; 140, 141; 150, 151) including interengageable first and second members (38; 137; 43; 49; 140; 150), each having engagement means (37; 138; 44; 141; 151), for latching said movable bracket (24; 124) at a selected angular position with respect to said stationary bracket (22; 122);
at least a first manually operated lever (36, 136) for releasing the interengagement of said first and second members (38, 137, 43, 49, 140, 150) to permit pivotal movement of said movable bracket (24, 124); and
a means (39, 40, 41, 60, 68, 133, 139) for cooperating said first member (38, 137) with said movable bracket (24, 124) for pivotally moving said first member (38, 137) according to the pivotal movement of said movable bracket (24, 124) characterised in that said cooperating means (39, 40, 41, 60, 68, 133, 139) is adapted to transform a predetermined angular displacement of said movable bracket (24, 124) into an enlarged angular displacement of said first member (38, 137) so as to effect precise adjustment of a desired steering column angle.

2. A device as claimed in claim 1, which further comprises pivoting means including a first pivot (25, 125) for pivoting said movable bracket (24, 124) with respect to said stationary bracket (22, 122), and a second pivot (33, 134) for pivotting said first member (38, 137) according to pivotal movement of said movable bracket (24, 124).

3. A device as claimed in claim 3, wherein said cooperating means comprises a linkage (39) connecting said first member (38, 137) and said movable bracket (24, 124), said linkage (39) is pivotably attached to said first member (38, 137) and to said movable bracket (24, 124) via third and fourth pivots (40, 41) respectively, and said third and fourth pivots (40, 41) are so arranged that the distance ($l_2$) between said third pivot (40) and said second pivot (33) is shorter than the distance ($l_1$) between said fourth pivot (41) and said first pivot (25).

4. A device as claimed in claim 1, wherein said first manually operated lever (36, 136) activates unlatching means (35, 35a, 52, 35a′, 35′, 143, 144) for releasing the interengagement of said first and second members (38, 137, 43, 49, 140, 150) and a bias spring (31, 131) is adapted to urge the movable bracket (24, 124) upwardly.

5. A device as claimed in claim 4, wherein said unlatching means (35, 35a, 52, 35′, 35a′, 143, 144) is associated with the second member (43, 49, 140, 150) for moving said second member (43, 49, 140, 150) to release the interengagement between said members (38, 137, 43, 49, 140, 150) when said first manually operated lever (36, 136) is operated.

6. A device as claimed in claim 3, wherein said linkage (39) permanently connects said first member (38, 137) and said movable bracket (24, 124) for common pivotal movement of both components (38, 137, 24, 124).

7. A device as claimed in claim 3, wherein said linkage (39) releasably connects said first member (38, 137) with said movable bracket (24) via a disconnecting means (60, 68) enabling said movable bracket (24, 124) to be temporarily disengaged from said latching mechanism (38, 37, 43, 44).

8. A device as claimed in claim 7, further comprising a locking means (61) maintaining said first and second members (38, 43) engaged while said movable bracket (24) is allowed to be temporarily released from said linkage (39) to swivel upward.

9. A device as claimed in claim 8, wherein said locking means includes a preloaded locking plate (61) biasing said second member (43) into engagement with said first member (38) so as to allow a selected preadjusted angular position between said stationary and movable bracket (22, 24) to be stored irrespective of the momentary position of the movable bracket (24).

10. A device as claimed in claim 9, which said locking plate (61) supports unlatching means (35a′, 35′) for releasing the interengagement of said first and second members (38, 43) in response to an actuation of said first manually operated lever (36), the movement of which operates said locking plate (61).

11. A device as claimed in claim 10, wherein said locking plate (61) and said first manually operated lever (36) being coupled directionally.

12. A device as claimed in claims 3 and 7, wherein said disconnecting means (60, 68) define said fourth pivot by means of a projection (41) at an end portion of the linkage (39) rotatably supporting a roller (68), said roller (68) engaging releasably a recess (60) formed at a lower margin of the movable bracket (24).

13. A device as claimed in claim 12, wherein said disconnecting means (60, 68) for temporarily releasing said movable bracket (24) is associated with said first manually operated lever (36) to be actuated thereby while said locking plate (61) remains in its rest position maintaining interengagement of said first and second members (38, 43), respectively.

14. A device as claimed in claim 13, wherein said disconnecting means (60, 68) is so arranged as to be actuated when said manually operated lever (36) is operated in the direction opposite to the direction in which said lever (36) is to be actuated in order to adjust the tilt.

15. A device as claimed in claim 7, wherein said disconnecting means (60, 68) is associated with a second manually operated lever (70) provided independently of said first lever (36), said second lever (70) being integral with said linkage (39).

16. A device as claimed in claim 2, wherein said cooperating means comprises a third pivot defined by a connector pin (133) projecting from one of said first member (137) or said movable bracket (124) and an opening (139) formed in the other of said movable bracket (124) or said first member (137), respectively, for receiving said connector pin (133) said third pivot being located relative to said first and second pivots (125, 134) so as to cause enlarged pivotal movement of the first member (137) in response to an angular movement of said movable bracket (124).

17. A device as claimed in claim 16, wherein said first member is a toothed plate (137) supporting said third pivot (133) closest to the interengagement means (138, 141) and in radial alignment with said first and second pivots (125, 134) the distance ($l_2$) between said third pivot (133) and said second pivot (134) is shorter than the distance ($l_1$) between said third and first pivots (133, 125).

18. A device as claimed in claim 17, wherein a second pivot pin (134) rotatably supporting said toothed plate (137) and said connector pin (133) both engage said movable bracket (124) spaced from its first pivot (125) by elongated openings (132, 139) oriented in one plane perpendicular to each other, the pin-and-opening engagement between said connector pin (133) and opening (139) and between said second pivot pin (134) and opening (132) serves to magnify the angular displacement of the toothed plate (137) in relation to the angular displacement of the movable bracket (124) according to the ratio of the distances ($l_1$, $l_2$) between the third and first pivot (133, 125) and the third and second pivots (133, 134) respectively.

## Patentansprüche

1. Einstellvorrichtung (10) für die Neigung einer Lenksäule für ein Kraftfahrzeug mit:

einer Lenksäule, die einen oberen, beweglichen Abschnitt (26b, 126b; 23, 123) und einen unteren, stationären Abschnitt (26a, 126a; 20, 120) umfaßt;

einer stationären Klammer (22; 122) zur festen Lagerung des unteren, stationären Abschnitts (26a, 126; 23, 123) an einer Fahrzeugkarosserie (B);

einer beweglichen Klammer (24; 124), die mit dem oberen, beweglichen Abschnitt (23; 123; 26b; 126b) für eine gemeinsame Bewegung verbunden ist und die in bezug auf die stationäre Klammer (22, 122) schwenkbar ist;

einer Verriegelungsvorrichtung (38, 37; 137, 138; 43, 44; 49; 140, 141; 150, 151), die miteinander in Eingriff bringbare erste und zweite Teile (38; 137; 43; 49; 140; 150) aufweist, von denen jedes Eingriffsmittel (37; 138; 44, 141; 151) zur Verriegelung der beweglichen Klammer (24; 124) in einer ausgewählten Winkellage in bezug auf die stationäre Klammer (22; 122) aufweist;

zumindest einem ersten, manuelle betätigten Hebel (36, 136) zum Lösen des Eingriffs zwischen dem ersten und zweiten Teil (38, 137, 43, 49, 140, 150), um eine Schwenkbewegung der beweglichen Klammer (24, 124) zu gestatten; und

einer Kooperationseinrichtung (39, 40, 41, 60, 68, 133, 139), um das erste Teil (38, 137) mit der beweglichen Klammer (24, 124) zusammenzubringen und das erste Teil (38, 137) entsprechend der Schwenkbewegung der beweglichen Klammer (24, 124) zu schwenken, dadurch gekennzeichnet, daß die Kooperationseinrichtung (39, 40, 41, 60, 68, 133, 139) eine bestimmte Winkelbewegung der beweglichen Klammer (24, 124) in eine vergrößerte Winkelbewegung des ersten Teils (38, 137) übersetzt, um eine präzise Einstellung eines gewünschten Winkels der Steuersäule auszuführen.

2. Einstellvorrichtung nach Anspruch 1, die außerdem eine Schwenkeinrichtung enthält mit einem ersten Schwenklager (25, 125) zur Schwenkung der beweglichen Klammer (24, 124) in bezug auf die stationäre Klammer (22, 122), und die ein zweites Schwenklager (33, 134) zur Schwenkung des ersten Teils (38, 137) entsprechend der Schwenkbewegung der beweglichen Klammer (24, 124) aufweist.

3. Einstellvorrichtung nach Anspruch 3, in der die Kooperationseinrichtung einen Verbindungshebel (39) enthält, der das erste Teil (38, 137) und die bewegliche Klammer (24, 124) miteinander verbindet, wobei der Verbindungshebel (39) schwenkbar über jeweils ein drittes und viertes Schwenklager (40, 41) dem ersten Teil 838, 137) und der beweglichen Klammer (24, 124) zugeordnet ist, und das dritte und vierte Schwenklager (40, 41) so angeordnet sind, daß die Entfernung ($l_2$) zwischen dem dritten Schwenklager (40) und dem zweiten Schwenklager (33) kürzer ist als die Entfernung ($l_1$) zwischen dem vierten Schwenklager (41) und dem ersten Schwenklager (25).

4. Einstellvorrichtung nach Anspruch 1, in der der erste, manuell betätigte Hebel (36, 136) eine Eintriegelungseinrichtung (35, 35a, 52, 35a', 35', 143, 144) zum Lösen des Eingriffs zwischen dem ersten und zweiten Teil (38, 137, 43, 49, 140, 150) aktiviert und eine Belastungsfeder (31, 131) die bewegliche Klammer (24, 124) aufwärts belastet.

5. Einstellvorrichtung nach Anspruch 4, in der die Entriegelungseinrichtung (35, 35a, 52, 35', 35a', 142, 144) dem zweiten Teil (43, 49, 140, 150) zugeordnet ist, um das zweite Teil (43, 49, 140, 150) zu bewegen, um den Eingriff zwischen diesen Teilen (38, 137, 43, 49, 140, 150) aufzuheben, wenn der erste, manuell betätigte Hebel (36, 136) betätigt wird.

6. Einstellvorrichtung nach Anspruch 3, in der der Verbindungshebel (39) das erste Teil (38, 137) permanent mit der beweglichen Klammer (24, 124) zu gemeinsamen Schwenkbewegung beider Elemente (38, 137, 24, 124) verbindet.

7. Einstellvorrichtung nach Anspruch 3, in der der Verbindungshebel (39) das erste Teil (38, 137) lösbar mit der beweglichen Klammer (24) über eine Entkopplungseinrichtung (60, 68) verbindet, die es gestattet, daß die bewegliche Klammer (24, 124) zeitweilig nicht mit der Verriegelungsvorrichtung (38, 37, 43, 44) im Eingriff ist.

8. Einstellvorrichtung nach Anspruch 7, mit einer Feststelleinrichtung (61), die das erste und das zweite Teil (38, 43) im Eingriff hält, während die bewegliche Klammer (24) zeitweilig von dem Verbindungshebel (39) gelöst sein kann, um aufwärts zu schwenken.

9. Einstellvorrichtung nach Anspruch 8, in der die Feststelleinrichtung eine vorgespannte Befestigungsplatte (61) aufweist, die das zweite Teil (43) in Richtung eines Eingriffs mit dem ersten Teil (38) belastet, so daß dadurch eine ausgewählte, voreingestellte Winkellage zwischen der stationären und der beweglichen Klammer (22, 24) gespeichert und beibehalten werden kann, unabhängig von der augenblicklichen Stellung der beweglichen Klammer (24).

10. Einstellvorrichtung nach Anspruch 9, in der die Befestigungsplatte (61) Entriegelungsmittel (35a', 35') lagert, um den Eingriff des ersten und zweiten Teils (38, 43) in Abhängigkeit von einer Betätigung des ersten, manuell betätigten Hebels (36) zu lösen, dessen Bewegen die Befestigungsplatte (61) betätigt.

11. Einstellvorrichtung nach Anspruch 10, in der die Befestigungsplatte (61) und der erste, manuell betätigte Hebel (36) unmittelbar miteinander gekuppelt sind.

12. Einstellvorrichtung nach Anspruch 3 und 7, in der die Entriegelungseinrichtung (60, 68) das vierte Schwenklager durch einen Vorsprung (41) an einem Endabschnitt des Verbindungshebels (39) bestimmt, der drehbar eine Rolle (68) lagert, wobei die Rolle (68) lösbar in eine Ausnehmung (60) eingreift, die am unteren Rand der beweglichen Klammer (24) ausgebildet ist.

13. Einstellvorrichtung nach Anspruch 12, in der die Entriegelungseinrichtung (60, 68) zum zeitweiligen Lösen der beweglichen Klammer (24) dem ersten, manuell betätigtgen Hebel (36) zugeordnet ist, um durch diesen betätigt zu werden, während die Befestigungsplatte (61) in ihrer Ruhestellung verbleibt und jeweils den Eingriff zwischen dem ersten und dem zweiten Teil (38, 43) aufrechterhält.

14. Einstellvorrichtung nach Anspruch 13, in der die Entriegelungseinrichtung (60, 68) so angeordnet ist, daß sie betätigt wird, wenn der manuell betätigte Hebel (36) in einer Richtung betätigt wird, die der Richtung, in der der Hebel (36) betätigt wird, um die Neigung einzustellen, entgegengesetzt ist.

15. Einstellvorrichtung nach Anspruch 7, in der die Entriegelungseinrichtung (60, 68) einem zweiten, manuell betätigten Hebel (70) angeordnet ist, der unabhängig von dem ersten Hebel (36) vorgesehen ist, wobei der zweite Hebel (70) integral mit dem Verbindungshebel (39) ausgebildet ist.

16. Einstellvorrichtung nach Anspruch 2, in der die Kooperationseinrichtung ein drittes Schwenklager aufweist, das durch einen Verbindungsbolzen (133), der von dem ersten Teil (137) oder der beweglichen Klammer (124) hervorsteht, und eine Öffnung (139) bestimmt, die in dem jeweils anderen Teil, der beweglichen Klammer (124) oder dem ersten Teil (137) ausgebildet ist, um den Verbindungsb olzen (133) aufzunehmen, wobei das dritte Schwenklager derart im Verhältnis zu dem ersten und zweiten Schwenklager (125, 134) angeordnet ist, daß es eine vergrößerte Schwenkbewegung des ersten Teils (137) in Abhängigkeit von einer Winkelbewegung der beweglichen Klammer (124) verursacht.

17. Einstellvorrichtung nach Anspruch 16, in der das erste Teil eine Zahnplatte (137) ist, die das dritte Schwenklager (133) eng benachbart zu der Eingriffseinrichtung (138, 141) und in radialer Ausrichtung mit dem ersten und zweiten Schwenklager (125, 134) abstützt, wobei die Entfernung ($l_2$) zwischen dem dritten Schwenklager (133) und dem zweiten Schwenklager (134) kürzer ist als die Entfernung ($l_1$) zwischen dem dritten und vierten Schwenklager (133, 125).

18. Einstellvorrichtung nach Anspruch 17, in der ein zweiter Schwenkbolzen (134), der die Zahnplatte (137) schwenkbar lagert, und der Verbindungsbolzen (133) beide mit der beweglichen Klammer (124) im Abstand von deren erstem Schwenklager (125) durch Langlöcher (132, 139) im Eingriff sind, die in einer Ebene rechtwinklig zueinander angeordnet sind und der Bolzen-Langloch-Eingriff zwischen dem Verbindungsbolzen (133) und dem Langloch (139) und zwischen dem zweiten Schwenkbolzen (134) und dem Langloch (132) dazu dient, die Winkelbewegung der Zahnplatte (137) in bezug auf die Winkelbewegung der beweglichen Klammer (124) zu vergrößern, entsprechend dem jeweiligen Verhältnis der Abstände ($l_1$, $l_2$) zwischen dem dritten und ersten Schwenklager (133, 125) und zwischen dem dritten und zweigen Schwenklager (133, 134).

## Revendications

1. Un dispositif de réglage de l'inclinaison (10) pour une colonne de direction d'une automobile comprenant:

ladit colonne de direction comportant une section mobile supérieure (26b, 126b; 23; 123) et une section stationnaire inférieure (26a, 126a; 20, 120);

un support stationnaire (22; 122) pour fixer fixement ladite section stationnaire inférieure (26a, 126, 23, 123) sur le châssis d'un véhicule (B);

un support mobile (24; 124) relié à ladite section mobile supérieure (23; 123; 26b; 126b) pour un mouvement avec elle et pivotant par rapport audit support stationnaire (22, 122);

un mécanisme de verrouillage (38, 37; 137, 138; 43, 44; 49; 140, 141; 150, 151) comprenant des premier et second éléments interengageables (38; 137; 43; 49; 140; 150), chacun ayant un moyen d'engagement (37, 138; 44; 141; 151), pour verrouiller le support mobile (24; 124) à une position angulaire choisie par rapport au support stationnaire (22; 122);

au moins un premier levier actionné manuellement (36, 136) pour libérer l'interengagement desdits premier et second éléments (38, 137, 43, 49, 140, 150) pour permettre un mouvement pivotant dudit support mobile (24, 124); et

un moyen (39, 40, 41, 60, 68, 133, 139) pour associer ledit premier élément (38, 137) audit support mobile (24, 124) de façon à déplacer de façon pivotante ledit premier élément (38, 137) conformément au mouvement pivotant du support mobile (24, 124) caractérisé en ce que ledit moyen d'association (39, 40, 41, 60, 68, 133, 139) est adapté pour transformer un déplacement angulaire prédéterminé du support mobile (24, 124) en un déplacement angulaire élargi dudit premier élément (38, 137) de façon à effectuer un réglage précis d'un angle de la colonne de direction choisi.

2. Un dispositif selon la revendication 1, qui comprend également un moyen pivotant comportant un premier pivot (25, 125) pour faire pivoter le support mobile précité (24, 124) par rapport au support stationnaire précité (22, 122), et un second pivot (33, 134), pour faire pivoter ledit premier élément (38, 137) conformément au mouvement pivotant dudit support mobile (24, 124).

3. Un dispositif selon la revendication 3, dans lequel le moyen d'association précité comporte une timonerie (39) reliant ledit premier élément (38, 137) et le support mobile précité (24, 124), ladite timonerie (39) est fixée de façon pivotante audit premier élément (38, 137) et audit support mobile (24, 124) via des troisième et quatrième pivots (40, 41) respectivement, lesdits troisième et quatrième pivots (40, 41) sont agencés de façon à ce que la distance ($l_2$) entre ledit troisième pivot (40) et ledit second pivot (33) soit plus courte que la distance ($l_1$) entre ledit quatrième pivot (41) et ledit premier pivot (25).

4. Un dispositif selon la revendication 1, dans lequel le premier levier actionné manuellement (36, 136) actionne un moyen de déverrouillage (35, 35a, 53, 35a', 35', 143, 144) pour libérer l'interengagement des premier et second éléments précités (38, 137, 43, 49, 140, 150) et un ressort de sollicitation (31, 131) est adapté pour pousser le support mobile (24, 124) ver le haut.

5. Un dispositif selon la revendication 1, dans lequel le moyen de déverrouillage précité (35, 35a, 52, 35', 35a', 143, 144) est associé au second élément (43, 49, 140, 150) pour déplacer ledit second élément (43, 49, 140, 150) pour libérer l'interengagement entre lesdits éléments (38, 137, 43, 49, 150) lorsque le premier levier actionné manuellement précité (36, 136) est actionné.

6. Un dispositif selon la revendication 3, dans lequel la timonerie (39) précitée relie de façon permanente le premier élément précité (38, 137) et le support mobile précité (24, 124) pour un mouvement pivotant commun des deux composants (38, 137, 24, 124).

7. Un dispositif selon la revendication 3, dans lequel la timonerie (39) précitée relie de façon libérable le premier élément précité (38, 137) au support mobile (24) via un moyen de déconnexion (60, 68) permettant au support mobile (24, 124) d'être désengagé temporairement dudit mécanisme de verrouillage (38, 37, 43, 44).

8. Un dispositif selon la revendication 7, comprenant également un moyen de verrouillage (61) maintenant les premier et second éléments précités (38, 43) engagés tandis que le support mobile (24) peut être temporairement libéré de la timonerie précitée (39) pour pivoter vers le haut.

9. Un dispositif selon la revendication 8, dans lequel le moyen de verrouillage précité comprend une plaque de verrouillage préchargée (61) sollicitant le second élément précité (43) en un engagement avec le premier élément précité (38) de façon à permettre à une position angulaire préréglée choisie entre le support stationnaire et le support mobile (22, 24) d'être stockée indépendamment de la position momentanée du support mobile (24).

10. Un dispositif selon la revendication 9, dans lequel la plaque de verrouillage précitée (61) supporte un moyen de déverrouillage (35a', 35') pour libérer l'interengagement des premier et second éléments précités (38, 43) en réponse à un actionnement du premier levier actionnellement précité (38), dont le mouvement actionne ladite plaque de verrouillage (61).

11. Un dispositif selon la revendication 10, dans lequel la plaque de verrouillage précitée (61) et le premier levier actionné manuellement précité (36) sont couplés directement.

12. Un dispositif selon les revendications 3 et 7, dans lequel les moyens de déconnexion précités (60, 68) définissent le quatrième pivot précité au moyen d'une protubérance (41) à une partie d'extrémité de la timonerie (39) supportant de façon rotative un rouleau (68), ledit rouleau (68) engageant de façon rotative un évidement (60) formé à un bord inférieur du support mobile (24).

13. Un dispositif selon la revendication 12, dans lequel le moyen de déconnexion précité (60, 68) pour libérer temporairement le support mobile précité (24) est associé au premier levier actionné manuellement précité (36) pour être ainsi actionné tandis que la plaque de verrouillage précitée (61) reste dans sa position de repos maintenant l'interengagement des premier et second éléments précités (38, 43), respectivement.

14. Dispositif selon la revendication 13, dans lequel le moyen de déconnexion précité (60, 68) est agencé de telle sorte qu'il soit actionné lorsque le levier actionné manuellement précité (36) est actionné dans la direction opposée à la direction dans laquelle ledit levier (36) doit être actionné de façon à régler l'inclinaison.

15. Un dispositif selon la revendication 7, dans lequel le moyen de déconnexion précité (60, 68) est associé à un second levier actionné manuellement (70) réalisé indépendamment du premier levier précité (36), ledit second levier (70) faisant partie intégrante de la timonerie précitée (39).

16. Un dispositif selon la revendication 2, dans lequel le moyen d'association précité comprend un troisième pivot défini par un axe de liaison (133) faisant saillie de l'un du premier élément précité (137) ou du support mobile précité (124) et une ouverture (139) formée dans l'autre élément dudit support mobile (124) ou dudit premier élément (137), respectivement, pour recevoir ledit axe de liaison (133) ledit troisième pivot étant situé par rapport aux premier et second pivots précités (125, 134) de façon à créer un mouvement pivotant élargi du premier élément (137) en réponse au mouvement angulaire dudit support mobile (124).

17. Un dispositif selon la revendication 16, dans lequel le premier élément précité est une plaque dentée (137) supportant le troisième pivot précité (133) le plus près du moyen d'interengagement (138, 141) et en alignement radial avec les premier et second pivots précités (125, 134) la distance ($l_2$) entre ledit troisième pivot (133) et ledit second pivot (134) est plus courte que la distance ($l_1$) entre lesdits troisième et premier pivots (133, 125).

18. Un dispositif selon la revendication 17, dans lequel un axe du second pivot (134) supportant de façon rotative la plaque dentée précitée (137) et l'axe de liaison précité (133) engage à la fois le support mobile (124) espacée de son premier pivot (125) par des ouvertures allongées (132, 139) orientées dans un plan perpendiculaire l'une par rapport à l'autre, l'engagement axe-et-ouverture entre ledit axe de liaison (133) et l'ouverture (139) et entre ledit axe du second pivot (134) et l'ouverture (132) sert à augmenter le déplacement angulaire de la plaque dentée (137) par rapport au déplacement angulaire du support mobile (124) conformément au rapport des distances ($l_1$, $l_2$) entre le troisième et le premier pivot (133, 125) et le troisième et le second pivot (133, 134), respectivement.

FIG.1

0 125 333

# FIG.5

# FIG.6

# FIG.2

# FIG.3

# FIG.4

# FIG.7

# FIG.8

# FIG.9

# FIG.10

# FIG.11

# FIG.12

# FIG. 13

# FIG. 14